(19) **Europäisches Patentamt**

**European Patent Office**

**Office européen des brevets**

(11) **EP 1 069 765 B1**

(12) **EUROPEAN PATENT SPECIFICATION**

(45) Date of publication and mention
of the grant of the patent:
**25.05.2005 Bulletin 2005/21**

(51) Int Cl.⁷: **H04N 5/14**, G11B 27/28

(21) Application number: **00305951.6**

(22) Date of filing: **13.07.2000**

(54) **Feature scene detecting method and apparatus, and storage medium containing processing program therefor**

Verfahren und Vorrichtung zur Merkmalszene-Detektion, und Speichermedium mit einem Verarbeitungsprogramm dafür

Méthode et dispositif de détection de scène particulière, et support d'enregistrement contenant un programme de traitement associé

(84) Designated Contracting States:
**DE FR GB**

(30) Priority: **14.07.1999 JP 20029199**

(43) Date of publication of application:
**17.01.2001 Bulletin 2001/03**

(73) Proprietor: **Hitachi, Ltd.**
**Chiyoda-ku, Tokyo (JP)**

(72) Inventors:
• **Sakamoto, Katsuto**
**c/o Hitachi Ltd.,Int.Prop.Group**
**Chiyoda-ku Tokyo100-8220 (JP)**
• **Yamamitsu, Tadashi**
**c/o Hitachi Ltd.,Intel.Prop.Gr.**
**Chiyoda-ku Tokyo 100-8220 (JP)**
• **Amemiya, Hirokazu**
**c/o Hitachi Ltd., Intel.Prop.Gr.**
**Chiyoda-ku Tokyo 100-8220 (JP)**
• **Omata, Mitsuteru c/o Hitachi, Ltd., Intel.Prop.Gr.**
**Chiyoda-ku Tokyo 100-8220 (JP)**
• **Hagihara, Yoshinobu**
**c/o Hitachi Ltd.,Int.Prop.Gr.**
**Chiyoda-ku Tokyo 100-8220 (JP)**
• **Saga, Toshihide c/o Akita Electronics Co. Ltd.**
**Minamiakita-gun Akita 010-0200 (JP)**

(74) Representative: **Hackney, Nigel John et al**
**Mewburn Ellis LLP**
**York House,**
**23 Kingsway**
**London WC2B 6HP (GB)**

(56) References cited:
**EP-A- 1 006 685**

• **PATENT ABSTRACTS OF JAPAN vol. 1999, no. 07, 31 March 1999 (1999-03-31) & JP 07 203303 A (INTERNATL BUSINESS MACH CORP &LT;IBM&GT;), 4 August 1995 (1995-08-04)**

## Description

The present invention relates generally to techniques for detecting feature scenes included in a video image, and more particularly to methods, apparatus and computer programs for detecting specific feature scenes within a video image, that has been divided and recorded in a plurality of sequential streams.

European patent application EP 1 006 685 A2 discloses a method and apparatus for processing a television signal, and for detecting the presence of commercials in the television signal. A commercial candidate section detector detects a commercial candidate section on the basis of a quiet section and a scene charge point. A commercial characteristic quantity detector judges whether the commercial candidate section has various characteristics of commercial, and adds a predetermined value to a commercial characteristic value on the basis of the judgment result.

With rapid development of television technologies and direction techniques, special effects, such as flashing lights and abrupt scene changes, in animation programs and the like, occasionally impair health of some viewers. Image flickering, intermittent images, rapid color changes and the like have been found to induce health problems in individuals suffering from photosensitive epilepsy, for example.

The Independent Television Commission (hereinafter "ITC"), working in conjunction with medical experts and television licensees, has proposed a set of guidelines for reducing the risk of exposure to potentially harmful stimuli from television viewing. Television images are refreshed a number of times each second and interlaced scanning can generate harmful image flicker. According to the ITC guidelines, flashing and flickering images in black and white which result in visible screen brightness changes of more than 10% of the viewing screen area at rates exceeding 3 flashes per second should be avoided. Moderate brightness level changes in up to 10% of the viewing screen are acceptable to the ITC, as are repetitive changes in screen brightness not exceeding 10% between any two consecutive image frames. The ITC finds flashes of highly saturated red color particularly hazardous, and recommends that such flashes be avoided. For a more detailed description of the ITC guidelines, reference may be had to section 7 of the "ITC Guidance Note on Flashing Images and Regular Patterns," which is available from the ITC web site, at http://www.itc. org.uk. which is incorporated herein by reference.

Picture editing techniques that can be used to determine likely sources of flickering images exist, however opportunities for further efficiencies are present.

What is needed are improved techniques for detecting special effects in video streams.

Preferably, the present invention has an object to provide a technique to reduce the above problems and enable detection of feature scene over a plurality of sequential streams.

Preferably, another object of the present invention is to provide a technique to enable an operator to replay a feature scene without being adversely effected by the feature scene when the feature scene is checked.

According to the present invention, techniques for detecting feature scenes within a sequential streams of video are provided. Embodiments can include a detecting apparatus that detects specific feature scenes included in a video image. The video image can be divided and recorded in a plurality of sequential streams, and the like. Further, the video image may be divided such that one or more one feature scenes is divided between any two of the plurality of sequential streams. Techniques according to the invention are sufficiently robust to treat a'plurality of sequential streams as a continuous video image for the purposes of feature scene detection.

In a representative embodiment according to the present invention, a method for detecting a specific feature scene in a video image is provided. The video image may be divided and recorded into a plurality of sequential streams, for example. The video image can comprise time information indicative of a replay time of the feature scenes, and the like. The method can include, for example, searching one or more frames comprising the video image for feature scenes. If a feature scene is located, information about the feature scene can be stored into a list, for example. Computing a detection frequency of the feature scenes per unit time period can also be part of the method. Further, the method can include classifying a specific group of feature scenes having a detection frequency equal to or greater than a threshold value. When a particular feature scene is divided across multiple sequential input streams, the method can determine that divided portions of the particular feature scene comprise one feature scene based upon the time information corresponding to frames within the video image.

In a further representative embodiment according to the present invention, a method for detecting a specific feature scene in a video image can search the video image for feature scenes by capturing a frame image and a corresponding time code. A feature amount can be computed for the captured frame image. The method can also include determining based upon the feature amount whether the frame image is a feature scene, and if so, storing information about the feature scene into a first list, for example. The method can also repeat the capturing, computing and determining for subsequent frame images.

In a yet further representative embodiment according to the present invention, a method for detecting a specific feature scene in a video image can compute a detection frequency of the feature scenes per unit time period by determining a number of feature scenes detected, based upon the information about the feature scene stored into the first list, for example. The method can determine a time period from the time information corresponding to the detected feature scenes in the plurality of sequential streams; and compute the detection frequency of the feature scenes per unit time period from the number of feature scenes detected and the time period.

In a still further representative embodiment according to the present invention, a method for detecting a specific feature scene in a video image can classify feature scenes by selecting from the feature scenes groups of feature scenes having a number of feature scenes detected per unit time period equal to or greater than a threshold value; and thereupon store the selected groups of features scenes into a second list, for example.

Further, the method can also include obtaining a specific group of feature scenes having a detection frequency per unit period equal to or greater than a threshold value from among feature scenes included in a video image. Then the obtained specific group of feature scenes can be replayed using a replay technique to reduce a health risk to a viewer. For example, in some specific embodiments, the replay technique to reduce a health risk to a viewer further can be a technique of replaying the feature scenes at a slower than normal rate, for example. Another technique is to replay the feature scenes using a color substituted for red. Other such techniques can also be used without departing from the spirit and scope of the present invention.

In a representative embodiment according to the present invention, a computer program product for detecting a specific feature scene in a video image is provided. The video image can be divided into portions, with each portion recorded into two or more sequential streams. The video image can have time information indicative of replay time of the feature scenes, for example. The computer program product comprises code that searches one or more frames comprising the video image for feature scenes, and if a feature scene is located, stores information about the feature scene into a first list, for example. The program product can also include code that computes a detection frequency of the feature scenes per unit time period; and code that classifies a specific group of feature scenes having a detection frequency equal to or greater than a threshold value. The program product further includes a computer readable storage medium for holding the code.

Numerous benefits are achieved by way of the present invention over conventional techniques.

According to a specific embodiment of the present invention, as a specific group of feature scenes is replayed using a replay technique that is different from a normal replay techniques, so that when the feature scene is checked, the replaying does not cause harmful effects to an operator performing the checking.

According to a specific embodiment of the present invention, as feature scene detection is performed while a video image divided and recorded in a plurality of sequential streams is handled as a continuous video image, feature scene detection over a plurality of sequential streams can be performed.

These and other benefits are described throughout the present specification. A further understanding of the nature and advantages of the invention herein may be realized by reference to the remaining portions of the specification and the attached drawings.

BRIEF DESCRIPTION OF THE DRAWINGS

Fig. 1 illustrates a diagram showing a representative system configuration of the feature scene detecting apparatus in a specific embodiment according to the present invention.

Fig. 2 illustrates a flowchart showing a representative feature scene detection processing in a specific embodiment according to the present invention.

Fig. 3 illustrates a diagram showing a representative data structure of data upon detection in a specific embodiment according to the present invention.

Fig. 4 illustrates a diagram showing a representative data structure after the completion of the detection processing in a specific embodiment according to the present invention.

Fig. 5 illustrates a diagram showing a representative user interface of the feature scene detecting apparatus in a specific embodiment according to the present invention.

Fig. 6 illustrates a diagram showing a representative correspondence between video images and results of the feature scene detection processing in a specific embodiment according to the present invention.

Fig. 7 illustrates a diagram showing a representative display of a total period of all the video images in the feature scene detecting apparatus in a specific embodiment according to the present invention.

Fig. 8 illustrates a diagram showing a representative display of roll number and time code in the roll in the feature scene detecting apparatus in a specific embodiment according to the present invention.

Fig. 9 illustrates a flowchart showing a representative video replay processing in a specific embodiment according to the present invention.

Fig. 10 illustrates a diagram showing an overview of color information change in a specific embodiment according to the present invention.

Fig. 11 illustrates a diagram showing an overview of slow feature scene replay in a specific embodiment according to the present invention.

## DESCRIPTION OF THE SPECIFIC EMBODIMENTS

The present invention provides techniques for feature scene detecting, including a feature scene detection apparatus, and a method for detecting a specific feature scenes included in a video image. The techniques according to the present invention can detect feature scenes in which a video image has been divided and recorded into a plurality of sequential streams analogous to a continuous video image.

In one technique for detecting a feature scene, special effects are detected using a device. The device detects a video image part (feature scene), corresponding to a condition previously designated in the detection device, from a detection object video image, and outputs the result of detection , i.e., respective detected video image frames, detected time and the like, to a monitor, a printer or the like connected to the device. For further description of one example of such a device, reference may be had to, "Hohsoh Gijutsu 1998 VOL. 51 NO. 9 Special Issue II: Flashing Video Image Detection in Animation Program," which is incorporated herein in its entirety for all purposes.

In conventional picture editing techniques, video image is held in a single source stream, for example, making detection processing of a plurality of video image parts included in a plurality of sequential streams as one video image unavailable. Accordingly, at the initial stage of video image formation, if a special effect, such as flashing light, for example, is present, but is split into components existing in a plurality of sequential streams, conventional techniques cannot determine whether the special effect corresponds to a previously-designated condition. Further, when many conventional techniques check a special effect, the checking process might pose a risk for a user performing the checking.

According to the present invention, feature scenes can be detected in a video image that has been divided and recorded into a plurality of sequential streams so that feature scene information is included in each video image in each stream. Specific embodiments according to the invention can detect such features scenes using time information, such as time code indicative of replay time of the feature scene, for example.

In a representative embodiment according to the present invention, the time information of the detected feature scenes is consecutive in a plurality of sequential streams. A detection frequency of the feature scenes per unit period is obtained. For example, in a case where a plurality of feature scenes are detected from the end of the first sequential stream to the beginning (hereinafter "head") of the second sequential stream, based upon the time codes of these scenes being consecutive, the number of feature scenes per unit period is calculated from the end of the first sequential stream to the head of the second sequential stream, thus the detection frequency is obtained. Then, the scenes with the obtained detection frequency equal to or greater than a threshold value are classified and recorded as a specific group of feature scenes (hereinafter "group").

Further, when the content of the classified group of specific feature scenes is checked, video images of the classified group of specific feature scenes are obtained from the plurality of sequential streams. Then, the obtained group of specific feature scenes are replayed by a replay technique different from a normal replay technique. The replay technique can be selected to reduce health risks to an operator, for example. For example, a replay technique using a color different from that of the color used in the scene or using a speed lower than a normal speed.

As the feature scene detecting apparatus of the present invention performs feature scene detection while regarding a video image divided and recorded in a plurality of sequential streams as a continuous video image, it can detect a feature scene split over sequential stream boundary in a plurality of sequential streams.

A feature scene detecting apparatus according to a representative embodiment of the present invention will be described. The described embodiment can perform feature scene detection and is capable of processing a video image divided and recorded in a plurality of sequential streams as a continuous video image.

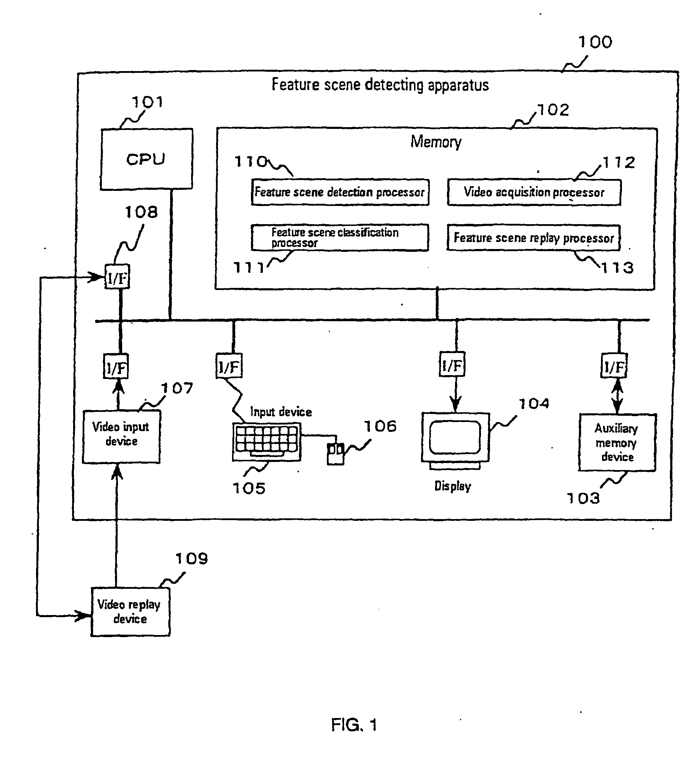

Fig. 1 shows a system configuration of a feature scene detecting apparatus 100 in a representative embodiment according to the present invention. As shown in Fig. 1, the feature scene detecting apparatus 100 has a CPU 101, a memory 102, an auxiliary memory device 103, a display device 104, a keyboard 105, a mouse 106, a video input device 107, an interface 108 and a video replay device 109.

The CPU 101 controls the operation of the overall feature scene detecting apparatus 100. The memory 102 is a memory device for loading various programs to control the operation of the overall feature scene detecting apparatus 100. The auxiliary memory device 103 is a memory device for storing the various programs and data.

The display device 104 can be a Cathode Ray Tube (CRT), for example, which displays the result of output from the feature scene detecting apparatus 100. The keyboard 105 and the mouse 106 are input devices which input requests to the feature scene detecting apparatus 100.

The video input device 107 can be a capture board, for example, which converts a video signal outputted from the video replay device 109 into a digital still image for input. Further, the video input device 107 obtains a time code corresponding to the digital still image.

The interface 108 controls the operation of the video replay device 109 from the feature scene detecting apparatus 100 and sends a command from the video replay device 109 to the feature scene detecting apparatus 100. The video replay device 109 replays a video image stored in a video tape or the like.

The feature scene detecting apparatus 100 comprises a feature scene detection processor 110, a feature scene classification processor 111, a video acquisition processor 112 and a feature scene replay processor 113.

The feature scene detection processor 110 detects feature scenes included in a video image. The video image can be divided and recorded in a plurality of sequential streams. Further, the video image can comprise time information, such as time codes, indicative of replay time of the feature scenes. The feature scene classification processor 111 obtains a detection frequency of the feature scenes per unit period based upon the time information of the detected feature scene. In a specific embodiment, the feature scenes are stored consecutively in the plurality of sequential streams. The feature scene classification processor classifies and records a specific group of feature scenes having a detection frequency equal to or greater than a threshold value.

The video acquisition processor 112 obtains a specific group of feature scenes having a detection frequency per unit period equal to or greater than a threshold value from among feature scenes included in a video image, from recording media. The feature scene replay processor 113 replays the obtained specific group of feature scenes by a replay method different from a normal replay method. The replay method may be slower, or less bright, for example, in order to minimize health effects on the viewer.

A program for causing the feature scene detecting apparatus 100 to function as the feature scene detection processor 110, the feature scene classification processor 111, the video acquisition processor 112 and the feature scene replay processor 113 is recorded on a recording medium, such as a CD-ROM, and stored into a magnetic disk or the like, then loaded into a memory of a computer to be executed by the processor. Note that the recording medium in which the program is recorded may be a recording medium other than the CD-ROM.

A video image replayed by the video replay device 109 includes a plurality of still images, and a time code stored in each still image. Further, a request to the feature scene detecting apparatus 100 may be sent from the video replay device 109 via the interface 108.

The video input device 107, such as a capture board, inputs a video signal outputted from the video replay device 109, then sequentially converts respective frames of the video image into digital still images and sends the images to the respective processors of the feature scene detecting apparatus 100. Further, the video input device 107 obtains time codes corresponding to the digital still images from the video signal.

In the feature scene detecting apparatus 100, the digital still images and time codes enter the memory 102 via the video input device 107, and are processed by the CPU 101 in accordance with the program loaded in the memory 102. The digital still images, the time codes, and the various information resulting from processing by the CPU 101 can be stored in the auxiliary memory device 103, in accordance with the processing by the CPU 101. Next, the processing by the CPU 101 of the image information will be described.

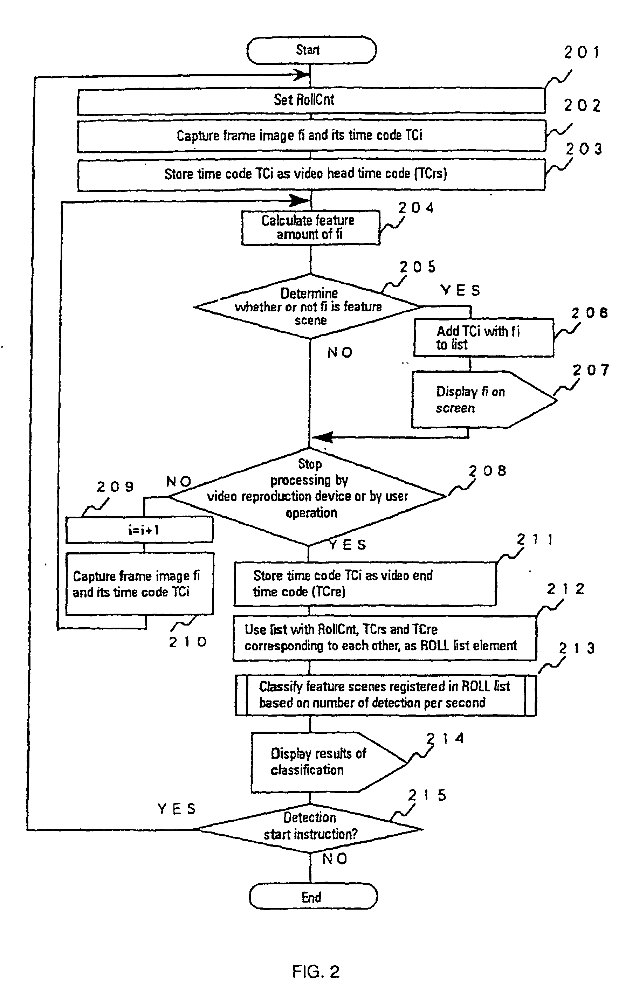

Fig. 2 is a flowchart showing a processing procedure of feature scene detection processing in a representative embodiment according to the present invention. This processing is executed when the user requests start of detection processing using the mouse 106 or the keyboard 105, or when the start of the detection processing is requested from the video replay device 109.

When the processing is executed, the feature scene detection processor 110 sets a number RollCnt uniquely indicating a detection object to be detected from a plurality of video images (step 201). The number RollCnt may be set by numbering in video-image input order, for example. Next, from the video image as a detection object, a digital still image, fi, and a time code, TCi, are captured via the video input device 107 (step 202). The time code TCi is stored as a head time code of the video image (TCrs) (step 203).

Next, a feature amount of the digital still image fi is calculated (step 204). Then, it is determined based on the feature amount whether the image fi is a feature scene (step 205). If it is determined that the image fi is a feature scene, then the digital still image fi, the feature amount computed in step 204 and the time code TCi are added to a list (step 206). The list can manage feature scenes in detected order, for example. Further, the digital still image fi is displayed in a table on the display device 104 in Fig. 1 (step 207).

Next, at step 208, it is determined whether the next digital still image fi+1 is to be processed. At this time, if the user requests to terminate the detection processing by the mouse 106 or the keyboard 105 or if detection processing termination is requested from the video replay device 109 in Fig. 1, the detection processing ends, and then processing at step 211 is performed. Otherwise, if detection processing termination is not requested, the next digital still image is read (steps 209 and 210), and processing from step 204 is continued.

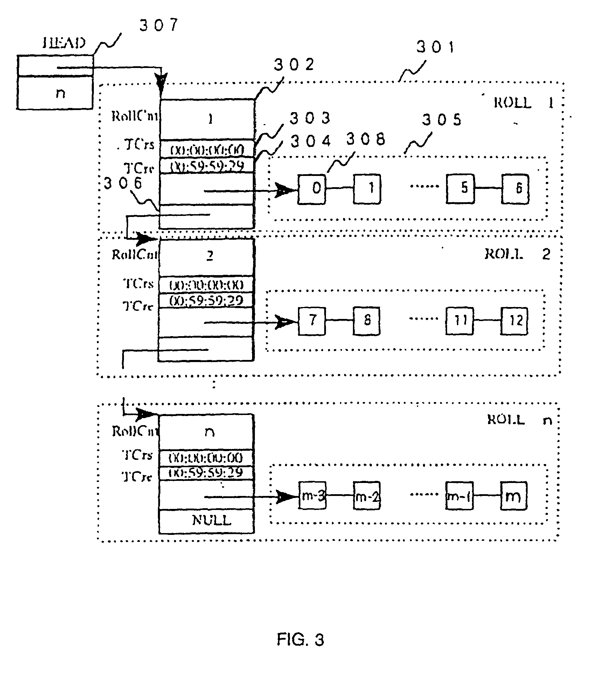

If the detection processing is halted at step 208, then the time code TCi immediately before the cessation of detection processing is stored as a time code (TCre) indicating the end of the video image (step 211). The remainder of steps in the flowchart illustrated by Fig. 2 will be discussed with reference to a data structure illustrated in Fig. 3.

Fig. 3 shows a structure for data about detected feature scenes in a representative embodiment according to the present invention. Fig. 3 illustrates an element 301, comprising a video image number 302, a start time code 303 and an end code 304 of a video image, and the feature scene list 305 generated at step 206, in correspondence with each other, are elements of a ROLL list (step 212).

A representative ROLL list that manages the data representing detected feature scenes is shown in Fig. 3. Elements 301 indicating respective video images are managed in a linear list with head data 307 indicating the head of the list. The head data 307 has a pointer to a head element 301 and the number of elements. The element 301 has the video number 302, the start time code 303 and the end time code 304 of the video image, the feature scene list 305, and a pointer 306 to the next element in the list.

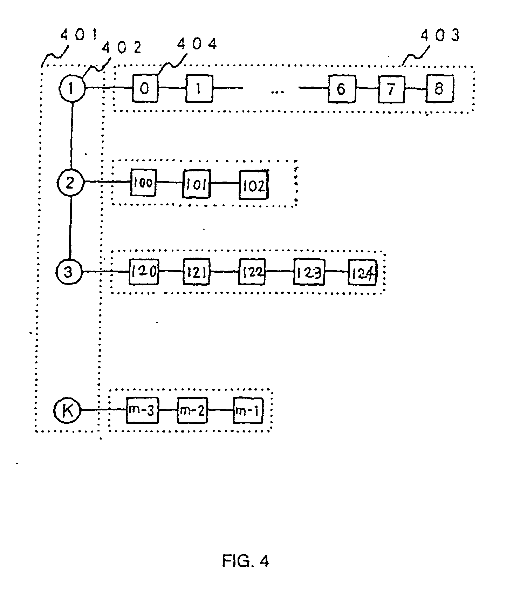

At step 213 of Fig. 2, the feature scene classification processor 111 arranges feature scenes 308 from the head scene, in each element of the ROLL list. Based upon the time codes of the feature scenes 308 being consecutive in a plurality of sequential streams, feature scene classification processor 111 calculates the number of feature scenes 308 detected per second, for example. The processor selects a portion of feature scenes having the number feature scenes detected equal to or greater than a preset threshold value, and classifies it as a group (step 213). The results of classification step 213 will be discussed with reference to Fig. 4.

Fig. 4 shows a data structure after the completion of the detection processing in a representative embodiment according to the present invention. The results of classification of the feature scenes into groups managed in a list is shown in Fig. 4. Fig. 4 illustrates a group list 401 managing elements 402, each indicating a group. Elements 402 indicate a group list 403, comprised of elements 404, each indicating a feature scene belonging to the group. The number of the element 404 indicating the feature scene in this figure corresponds to the number of the feature scene 308 in Fig. 3. The term "detection result" will be used to indicate the data generated at step 213.

Then, at step 214, the feature scene detection processor 110 displays the detection result generated at step 213. If the user requests feature scene detection processing in another sequential stream at step 215, the process returns to step 201, and further feature scene detection processing is performed. Further, when the user requests termination of the feature scene detection, the feature scene detection processing ends. In an alternative embodiment, steps 213 and 214 may be executed after step 215, enabling a plurality of feature scenes to be processed prior to creating the data structures of Fig. 3 and Fig. 4.

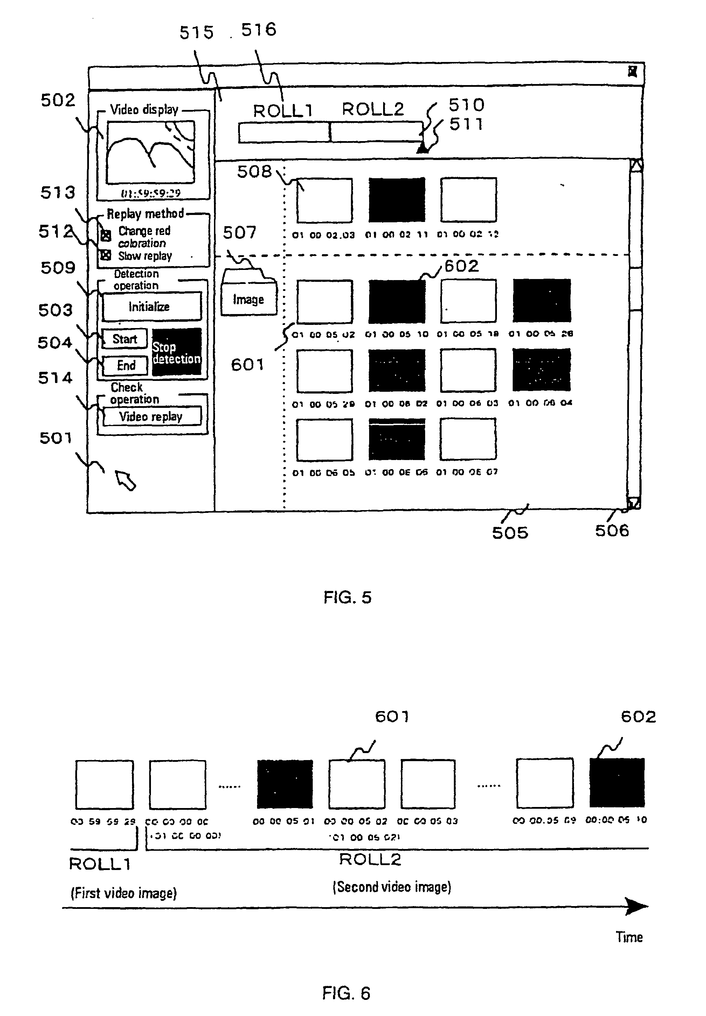

Fig. 5 shows an example user interface for the feature scene detecting apparatus 100 in a representative embodiment according to the present invention. The user uses the mouse 106 or the keyboard 105 in Fig. 1, to operate a mouse pointer 501 to point to a desired position on the user interface.

A video display area 502 displays an object video image and a time code added to the image. A video image that is the object of detection and a video image that is the object of detection-result checking are displayed in this area.

A detection operation start button 503 is used to request start of a detection operation. The feature scene detection processing in Fig. 2 is started by clicking this button using the mouse pointer 501. Further, a detection operation end button 504 is used to request termination of the detection operation. The feature scene detection processing in Fig. 2 is terminated by clicking this button using the mouse pointer 501.

A feature scene table area 505 is used to display a table of detected feature scenes. The results of the feature scene detection processing in Fig. 2 are displayed in this area. The correspondence between the video images and the results of detection is as shown in Fig 6.

Fig. 6 shows the correspondence between the video images and the results of feature scene detection processing in a representative embodiment according to the present invention. In Fig. 6, still images 601 and 602 are detected based on luminance change.

A scroll bar 506 is used when all of the results of detection cannot be displayed in the feature scene table area 505. As the buttons and scroll bar used in the user interface are often used in general personal computer processing, the detailed description on these tools is well known to those of ordinary skill in the art.

A group icon 507 of Fig. 5 indicates a group detected by the feature scene detection processing in Fig. 2. The group is selected by selection of this icon using the mouse pointer 501, for example. The still images, the time codes and the feature amounts of the images, detected by the feature scene detection processing in Fig. 2, are displayed in icons 508 belonging to the group.

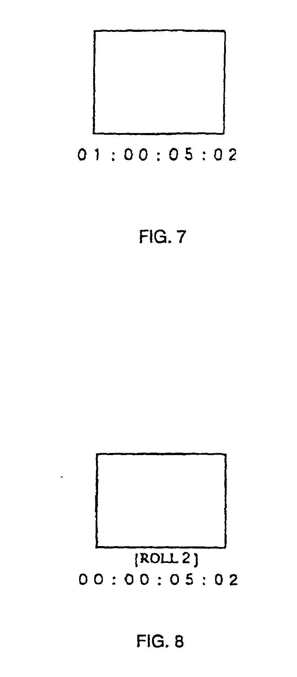

Fig. 7 shows a display of a total period of all the video images in the feature scene detecting apparatus 100 of a specific embodiment according to the present invention. Fig. 8 shows a display of roll number and time code within the roll, in the feature scene detecting apparatus 100 of a specific embodiment according to the present invention. The time code is displayed below the group icon 507 and the icon 508, which belong to the group, as well. The display is of the total time period for the entire video image, and is continuous in a plurality of sequential streams as shown in Fig. 7. The display includes a combination of a title of the video image and its time code as shown in Fig. 8.

A detection order display area 515 of Fig. 5 is used to display the detection order of a plurality of video images. A video length 510 indicates the length of each video image, and a video title 516 indicates the title of the video image. To delete all the results of detection, deletion processing is performed by clicking an initialize button 509. Further, if a junction between respective video images is designated by a pointer 511, the result of detection from a new video image is inserted at an arbitrary position among the results of detection for a plurality of existing video images. The position to insert the result of detection may be automatically designated if unique time codes are written in all the video images as detection objects.

A video replay button 514 is used for performing a checking operation on the detection result video images. When a group is selected and this button is depressed, video image replay is performed beginning at an image corresponding to a time code indicating the group start time to a time code indicating the group end time.

Video replay method buttons 512 and 513 indicate video replay methods for display in the video display area 502. The video replay method button 513 is used to change red coloration. If this button is depressed, processing to display a video image with changed red coloration in the video display area 502 is performed. The video replay method button 512 is used to perform slow replay. If this button is depressed, processing to slowly display a video image in the video display area 502 is performed.

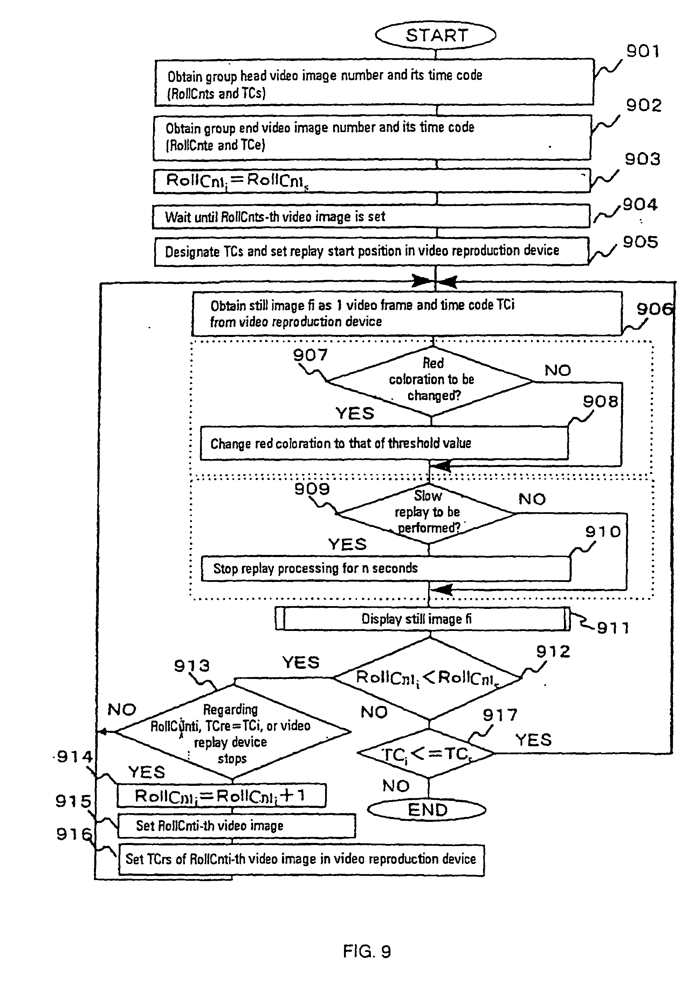

Fig. 9 is a flowchart showing a processing procedure of video replay processing in a representative embodiment according to the present invention. The flowchart of the video replay processing in Fig. 9 will be described for a case in which the results of feature scene detection processing of Fig. 2 are generated prior to the start of video replay processing. This processing is performed when the group icon 507 is selected and the video replay button 514 is depressed.

When the processing of Fig. 9 is performed, the video acquisition processor 112 obtains a group head video image number RollCnts and a time code TCs (step 901). Video acquisition processor 112 also obtains a group end video image number RollCnte and a time code TCe (step 902). Then, the processor stores the number RollCnts as the current video image number RollCnti (step 903).

Next, the process waits until the RollCnts-th video image is set in the video replay device 109 (step 904). Then, video fast forward or rewind is performed to a position corresponding to the time code TCs in the video replay device 109 (step 905).

Next, replay is started from the position set at step 905. In a step 906, a still image fi and its time code TCi are sequentially obtained. Then at step 911, the still image fi is displayed.

Finally, at steps 912, 913 and 917, it is determined whether the video replay is to be continued. First, at step 912, it is determined whether the current video image number RollCnti is less than the group end video image number RollCnte. If the current video image number is less than the group end video image number, it is determined at step 913 whether the entire video image of the video image number has been replayed. If the entire video image of the current video image number has not been replayed, then the processing from step 906 is continued. On the other hand, if the entire video image of the current video image number has been replayed, a video image of the next video image number is set in steps 914 to 916 before the processing at step 906 is continued, and a time code TCrs in the start position of the video image of the next video image number is set in the video replay device 109 (steps 914 to 916).

If it is determined at step 912 that the current video image number is equal to the group end video image number, it is determined whether the time code TCi of the current video image is greater than the group end time code TCe. If the current video time code TCi is equal to or less than the group end time code TCe, the processing from step 906 is continued. Further, if the current video time code TCi is greater than the group end time code TCe, the video replay is stopped, and the process ends. The video replay is performed by the above processing.

Next, a processing method to replay and check a video image in a specific embodiment according to the invention will be described. This processing is realized by adding processing for steps 907 to 910 between steps 906 and 911.

First, a representative example method of changing red coloration in a specific embodiment according to the present invention will be described. This processing is performed when the video replay method button 513 in Fig. 5 is selected. In the flowchart of Fig. 9, at step 907, the feature scene replay processor 113 determines whether the video replay method button 513 is selected, and if it has been selected, the red coloration change processing is performed (step 908).

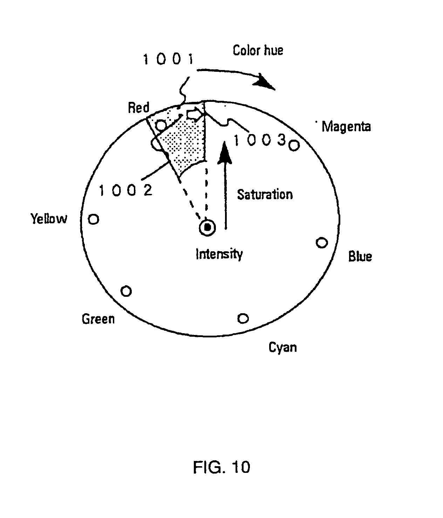

Fig. 10 shows an overview of color information change in a representative embodiment according to the present invention. A technique for changing red coloration in a HIS (Hue, Intensity and Saturation) color model is shown in Fig. 10. In the example of Fig. 10, a part 1001 indicates the range of red to be changed, a color 1002 belonging to the part 1001 is replaced with a color 1003 out of the range of red, nearest to the value of the color 1002, based on the boundary between the part 1001 and the space other that the part 1001 as a threshold value.

Next, processing for replaying a video image at a low speed in a specific embodiment according to the invention will be described. This processing is performed when the video replay method button 512 in Fig. 5 is selected. In the flowchart of Fig. 9, at step 909, the feature scene replay processor 113 determines whether the video replay method button 512 is selected, and if it has been selected, the processing for low-speed video image replay is performed (step 910).

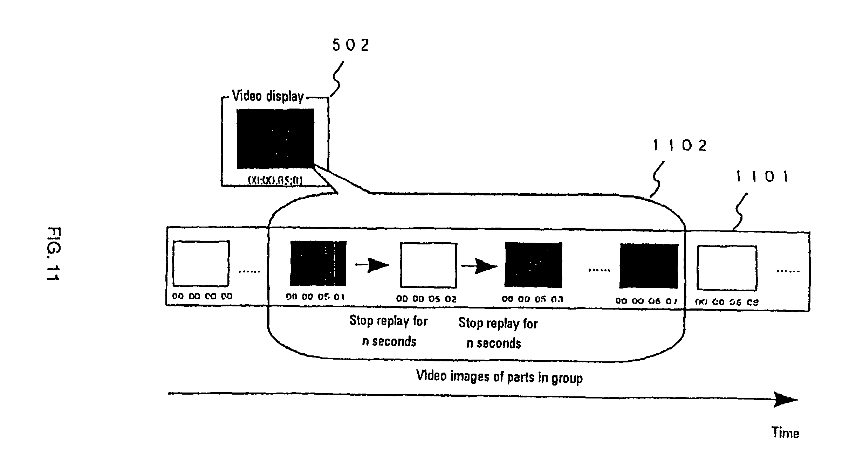

Fig. 11 shows an overview of a feature scene slow replay technique in a representative embodiment according to the present invention. A technique for performing low-speed video replay will be discussed with respect to an example case of replaying a video image part 1102 of video image 1101 in Fig. 11. In this example, replay is performed with replay stoppage for n seconds between respective still images of the video image part 1102. The replay stoppage

**EP 1 069 765 B1**

period of n seconds can be obtained from the following expression, for example, with a threshold value for an average number of detections per second, used in group classification:

$$n = 1/30 \times (\text{Maximum number of detections per second - average number}$$

$$\text{of detections as threshold value upon group detection} + 1)$$

The above expression is an example of one technique for obtaining n. In case of simple low-speed replay, replay independent of content can be made by performing the replay with the value n as a fixed value equal to or greater than 1.

As described above, as the feature scene detecting apparatus of a specific embodiment according to the present invention performs feature scene detection for video images, including video images that have been divided and recorded in a plurality of sequential streams as a continuous video image. Thus, embodiments according to the present invention can perform feature scene detection over a boundary between two sequential streams.

Further, in a feature scene detecting apparatus of a specific embodiment according to the present invention, a specific group of feature scenes can be replayed using a replay method different from a normal replay method, so that when the feature scene is checked, an operator will not suffer adverse effects from replaying the feature scene. Specific embodiments include any of replaying the feature scene at slower than normal speed, replacing red color with other colors, and the like.

According to the present invention, as feature scene detection is performed while a video image that has been divided and recorded in a plurality of sequential streams is handled as a continuous video image, feature scene detection over a plurality of sequential streams can be performed.

The preceding has been a description of the preferred embodiment of the invention. It will be appreciated that deviations and modifications can be made without departing from the scope of the invention, which is defined by the appended claims.

**Claims**

1. A feature scene detecting apparatus (100) for detecting a specific feature scene included in a video image, comprising:

    a feature scene detection processor (110) that detects feature scenes included in a video image, divided and recorded in a plurality of sequential streams so as to divide at least one feature scene between any two of said plurality of sequential streams, with time information indicative of replay time of the feature scenes; and a feature scene classification processor (111) that obtains a detection frequency of the feature scenes per unit period, based upon said time information of the detected feature scenes in the plurality of sequential streams, and classifies and records a specific group of feature scenes which is a selected portion of the detected feature scenes having a detection frequency, that is the number of the detected feature scenes in the portion per unit time, equal to or greater than a threshold value.

2. The feature scene detecting apparatus for detecting a specific feature scene included in a video image of claim 1, said apparatus further comprising:

    a video acquisition processor (112) that obtains a specific group of feature scenes having a detection frequency per unit period equal to or greater than a threshold value, among feature scenes included in a video image, from a sequential stream; and a feature scene replay processor (113) that replays said obtained specific group of feature scenes using a replay technique to reduce a health risk to a viewer.

3. The feature scene detecting apparatus (100) for detecting a specific feature scene included in a video image of claim 2, wherein said replay technique to reduce a health risk to a viewer further comprises any selected from a technique of replaying the feature scenes at a slower than normal rate, a technique of replaying the feature scenes using a color substituted for a colour used in the scene.

4. A method for detecting a specific feature scene in a video image, said video image divided and recorded into a plurality of sequential streams so as to divide at least one feature scene between any two of said plurality of

8

sequential streams, said video image having time information indicative of replay time of said feature scenes, said method comprising:

searching at least one of a plurality of frames comprising said video image for feature scenes, and if a feature scene is located, storing information about said feature scene into a first list;
computing a detection frequency of said feature scenes per unit time period;
classifying a specific group of feature scenes which is a selected portion of the detected feature scenes having a detection frequency, that is the number of the detected feature scenes in the portion per unit time, equal to or greater than a threshold value.

5. The method for detecting a specific feature scene in a video image of claim 4, wherein said plurality of sequential streams includes at least a first sequential stream and a second sequential stream, said video image including at least one feature scene having a first portion recorded in said first sequential stream and a second portion recorded in said second sequential stream, said searching at least one of a plurality of frames further comprising determining based upon said time information that said first portion and said second portion comprise said at least one feature scene.

6. The method for detecting a specific feature scene in a video image of claim 4, wherein said searching said video image for feature scenes further comprises:

capturing a frame image and a corresponding time code;
computing a feature amount for said frame image;
determining based upon said feature amount whether said frame image is a feature scene, and if said frame is determined to be a feature scene, storing information about said feature scene into a first list; and
repeating said capturing, computing and determining for subsequent frame images.

7. The method for detecting a specific feature scene in a video image of claim 4, wherein said computing a detection frequency of said feature scenes per unit time period further comprises:

determining a number of feature scenes detected, based upon said information about said feature scene stored into said first list;
determining a time period from said time information corresponding to said detected feature scenes in the plurality of sequential streams; and
computing said detection frequency of the feature scenes per unit time period from said number of feature scenes detected and said time period.

8. The method for detecting a specific feature scene in a video image of claim 4, wherein said classifying further comprises:

selecting from said feature scenes groups of feature scenes having a number of feature scenes detected per unit time period equal to or greater than said threshold value; and
storing said groups of features scenes into a second list.

9. The method for detecting a specific feature scene in a video image of claim 4, said method further comprising:

obtaining a specific group of feature scenes having a detection frequency per unit period equal to or greater than a threshold value, among feature scenes included in a video image;
replaying said obtained specific group of feature scenes using a replay technique to reduce a health risk to a viewer.

10. The method for detecting a specific feature scene in a video image of claim 9, wherein said replay technique to reduce a health risk to a viewer further comprises any selected from a technique of replaying the feature scenes at a slower than normal rate, a technique of replaying the feature scenes using a color substiruted for a colour used in the scene.

11. A computer program product for detecting a specific feature scene in a video image, said video image divided and recorded into a plurality of sequential streams so as to divide at least one feature scene between any two of said plurality of sequential streams, said video image having time information indicative of replay time of said feature scenes, said computer program product comprising:

code that searches at least one of a plurality of frames comprising said video image for feature scenes, and if a feature scene is located, stores information about said feature scene into a first list;
code that computes a detection frequency of said feature scenes per unit time period;
code that classifies a specific group of feature scenes which is a selected portion of the detected feature scenes having a detection frequency, that is the number of the detected feature scenes in the portion per unit time, equal to or greater than a threshold value; and
a computer readable storage medium for holding the code.

12. The computer program product for detecting a specific feature scene in a video image of claim 11, wherein said plurality of sequential streams includes at least a first sequential stream and a second sequential stream, said video image including at least one feature scene having a first portion recorded in said first sequential stream and a second portion recorded in said second sequential stream, wherein said code that searches at least one of a plurality of frames determines based upon said time information that said first portion and said second portion comprise said at least one feature scene.

13. The computer program product for detecting a specific feature scene in a video image of claim 11, wherein said code that searches said video image for feature scenes further comprises:

code that captures a frame image and a corresponding time code;
code that computes a feature amount for said frame image;
code that determines based upon said feature amount whether said frame image is a feature scene, and if said frame is determined to be a feature scene, stores information about said feature scene into a first list; and
code that repeatedly invokes said code that captures, code that computes and code that determines for subsequent frame images.

14. The computer program product for detecting a specific feature scene in a video image of claim 11, wherein said code that computes a detection frequency of said feature scenes per unit time period further comprises:

code that determines a number of feature scenes detected, based upon said information about said feature scene stored into said first list;
code that determines a time period from said time information corresponding to said detected feature scenes in the plurality of sequential streams; and
code that computes said detection frequency of the feature scenes per unit time period from said number of feature scenes detected and said time period.

15. The computer program product for detecting a specific feature scene in a video image of claim 11, wherein said code that classifies further comprises:

code that selects from said feature scenes groups of feature scenes having a number of feature scenes detected per unit time period equal to or greater than said threshold value; and
code that stores said groups of features scenes into a second list.

16. The computer program product for detecting a specific feature scene in a video image of claim 11, said computer program product further comprising:

code that obtains a specific group of feature scenes having a detection frequency per unit period equal to or greater than a threshold value, among feature scenes included in a video image; and
code that replays said obtained specific group of feature scenes using a replay technique to reduce a health risk to a viewer.

17. The computer program product for detecting a specific feature scene in a video image of claim 16, wherein said replay technique to reduce a health risk to a viewer further comprises any selected from a technique of replaying the feature scenes at a slower than normal rate, a technique of replaying the feature scenes using a color substituted for a colour used in the scene.

18. The apparatus of claim 1 wherein the apparatus includes

means for searching at least one of a plurality of frames comprising said video image for feature scenes, and if a feature scene is located, storing information about said feature scene into a first list.

**19.** The apparatus for detecting a specific feature scene in a video image of claim 18, said apparatus further comprising:

means for obtaining a specific group of feature scenes having a detection frequency per unit period equal to or greater than a threshold value, among feature scenes included in a video image; and
means for replaying said obtained specific group of feature scenes using a replay technique to reduce a health risk to a viewer.

**Patentansprüche**

**1.** Vorrichtung (100) für Merkmalsszenendetektion zum Detektieren einer in einem Videobild enthaltenen spezifischen Merkmalsszene, umfassend

einen Prozessor (110) für Merkmalsszenendetektion, der Merkmalsszenen detektiert, die mit die Wiedergabezeit der Merkmalsszenen angebender Zeitinformation in einem Videobild enthalten sind, das in mehrere sequentielle Ströme aufgeteilt und in diesen gespeichert ist, so daß mindestens eine Merkmalsszene zwischen jeweils zweien der mehreren sequentiellen Ströme aufgeteilt ist, und

einen Prozessor (111) für Merkmalsszenenklassifikation, der in Abhängigkeit von der Zeitinformation der detektierten Merkmalsszenen in den mehreren sequentiellen Strömen eine Detektionsfrequenz der Merkmalsszenen pro Zeiteinheit erhält und eine spezifische Gruppe von Merkmalsszenen klassifiziert und speichert, die ein ausgewählter Anteil der detektierten Merkmalsszenen ist, die eine Detektionsfrequenz, d.h. die Anzahl der detektierten Merkmalsszenen in dem Anteil pro Zeiteinheit, haben, die größer oder gleich einem Schwellwert ist.

**2.** Vorrichtung für Merkmalsszenendetektion zum Detektieren einer in einem Videobild enthaltenen spezifischen Merkmalsszene nach Anspruch 1, wobei die Vorrichtung ferner umfaßt:

einen Videoerfassungsprozessor (112), der eine spezifische Gruppe von Merkmalsszenen mit einer Detektionsfrequenz pro Zeiteinheit größer oder gleich einem Schwellwert aus in einem Videobild enthaltenen Merkmalsszenen aus einem sequentiellen Strom erhält, und
einen Merkmalsszenenwiedergabeprozessor (113), der die erhaltene spezifische Gruppe von Merkmalsszenen mittels einer Wiedergabetechnik zur Verringerung von Gesundheitsrisiken für Zuschauer wiedergibt.

**3.** Vorrichtung (100) für Merkmalsszenendetektion zum Detektieren einer in einem Videobild enthaltenen spezifischen Merkmalsszene nach Anspruch 2, wobei die Wiedergabetechnik zur Verringerung von Gesundheitsrisiken für Zuschauer ferner je nach Auswahl eine Technik zur Wiedergabe der Merkmalsszenen mit einer langsameren Geschwindigkeit als der normalen oder eine Technik zur Wiedergabe der Merkmalsszenen mit einer Ersatzfarbe für eine in der Szene benutzte Farbe umfaßt.

**4.** Verfahren zum Detektieren einer spezifischen Merkmalsszene in einem Videobild, das in mehrere sequentielle Ströme aufgeteilt und in diesen gespeichert ist, so daß mindestens eine Merkmalsszene zwischen jeweils zweien der mehreren sequentiellen Ströme aufgeteilt ist, wobei das Videobild die Wiedergabezeit der Merkmalsszenen angebende Zeitinformationen aufweist, wobei das Verfahren umfaßt:

Suchen nach Merkmalsszenen in mindestens einem der mehreren das Videobild umfassenden Frames und, wenn eine Merkmalsszene aufgefunden wird, Speichern von Informationen über die Merkmalsszene in einer ersten Liste,
Berechnen einer Detektionsfrequenz der Merkmalsszenen pro Zeiteinheit,
Klassifizieren einer spezifischen Gruppe von Merkmalsszenen, die ein ausgewählter Anteil der detektierten Merkmalsszenen ist, die eine Detektionsfrequenz, d.h. die Anzahl der detektierten Merkmalsszenen in dem Anteil pro Zeiteinheit, haben, die größer oder gleich einem Schwellwert ist.

**5.** Verfahren zum Detektieren einer spezifischen Merkmalsszene in einem Videobild nach Anspruch 4, wobei die mehreren sequentiellen Ströme mindestens einen ersten und einen zweiten sequentiellen Strom enthalten, wobei das Videobild mindestens eine Merkmalsszene mit einem im ersten sequentiellen Strom gespeicherten ersten Anteil und einem im zweiten sequentiellen Strom gespeicherten zweiten Anteil enthält, wobei das Suchen in dem mindestens einem der mehreren Frames ferner das Bestimmen anhand der Zeitinformation, daß der erste und der zweite Anteil, die mindestens eine Merkmalsszene umfassen, beinhaltet.

**6.** Verfahren zum Detektieren einer spezifischen Merkmalsszene in einem Videobild nach Anspruch 4, wobei das Suchen im Videobild nach Merkmalsszenen ferner umfaßt:

Erfassen eines Frame-Bildes und eines entsprechenden Zeitcodes,
Berechnen einer Merkmalsmenge für das Frame-Bild,
Bestimmen anhand der Merkmalsmenge, ob das Frame-Bild eine Merkmalsszene ist, und, wenn bestimmt wird, daß es eine Merkmalsszene ist, Speichern von Informationen über die Merkmalsszene in einer ersten Liste, und
Wiederholen des Erfassens, Berechnens und Bestimmens für nachfolgende Frame-Bilder.

**7.** Verfahren zum Detektieren einer spezifischen Merkmalsszene in einem Videobild nach Anspruch 4, wobei das Berechnen einer Detektionsfrequenz der Merkmalsszenen pro Zeiteinheit ferner umfaßt:

Bestimmen einer Anzahl von detektierten Merkmalsszenen anhand der Informationen über die in der ersten Liste gespeicherte Merkmalsszene,
Bestimmen einer Zeitdauer aus der den detektierten Merkmalsszenen in den mehreren sequentiellen Strömen entsprechenden Zeitinformation, und
Berechnen der Detektionsfrequenz der Merkmalsszenen pro Zeiteinheit aus der Anzahl von detektierten Merkmalsszenen und der Zeitdauer.

**8.** Verfahren zum Detektieren einer spezifischen Merkmalsszene in einem Videobild nach Anspruch 4, wobei das Klassifizieren ferner umfaßt:

Auswählen von Merkmalsszenen mit einer Anzahl von detektierten Merkmalsszenen pro Zeiteinheit, die größer oder gleich dem Schwellwert ist, aus den Merkmalsszenen, und
Speichern der Gruppen von Merkmalsszenen in einer zweiten Liste.

**9.** Verfahren zum Detektieren einer spezifischen Merkmalsszene in einem Videobild nach Anspruch 4, ferner umfassend:

Erhalten einer spezifischen Gruppe von Merkmalsszenen mit einer Detektionsfrequenz pro Zeiteinheit, die größer oder gleich einem Schwellwert ist, aus den im Videobild enthaltenen Merkmalsszenen,
Wiedergeben der erhaltenen spezifischen Gruppe von Merkmalsszenen mittels einer Wiedergabetechnik zur Verringerung von Gesundheitsrisiken für Zuschauer.

**10.** Verfahren zum Detektieren einer spezifischen Merkmalsszene in einem Videobild nach Anspruch 9, wobei die Wiedergabetechnik zur Verringerung von Gesundheitsrisiken für Zuschauer ferner je nach Auswahl eine Technik zur Wiedergabe der Merkmalsszenen mit einer langsameren Geschwindigkeit als der normalen oder eine Technik zur Wiedergabe der Merkmalsszenen mit einer Ersatzfarbe für eine in der Szene benutzte Farbe umfaßt.

**11.** Computerprogrammprodukt zum Detektieren einer spezifischen Merkmalsszene in einem Videobild, wobei das Videobild in mehrere sequentielle Ströme aufgeteilt und in diesen gespeichert ist, so daß mindestens eine Merkmalsszene zwischen jeweils zweien der mehreren sequentiellen Ströme aufgeteilt ist, wobei das Videobild die Wiedergabezeit der Merkmalsszenen angebende Zeitinformationen aufweist, wobei das Computerprogrammprodukt umfaßt:

Code, der in mindestens einem der mehreren das Bild umfassenden Frames nach Merkmalsszenen sucht und, wenn eine Merkmalsszene aufgefunden wird, Informationen über die Merkmalsszene in einer ersten Liste speichert,
Code, der eine Detektionsfrequenz der Merkmalsszenen pro Zeiteinheit berechnet,
Code, der eine spezifische Gruppe von Merkmalsszenen klassifiziert, die ein ausgewählter Anteil der detektierten Merkmalsszene mit einer Detektionsfrequenz, d.h. die Anzahl der detektierten Merkmalsszenen in dem Anteil pro Zeiteinheit, ist, die größer oder gleich einem Schwellwert ist, und
ein computerlesbares Speichermedium zum Bereithalten des Codes.

**12.** Computerprogrammprodukt zum Detektieren einer spezifischen Merkmalsszene in einem Videobild nach Anspruch 11, wobei die mehreren sequentiellen Ströme mindestens einen ersten und einen zweiten sequentiellen Strom enthalten, wobei das Videobild mindestens eine Merkmalsszene mit einem im ersten sequentiellen Strom gespeicherten ersten Anteil und einem im zweiten sequentiellen Strom gespeicherten zweiten Anteil enthält, wobei der Code, der in mindestens einem der mehreren Frames sucht, anhand der Zeitinformation bestimmt, daß der erste und der zweite Anteil mindestens eine Merkmalsszene umfassen.

13. Computerprogrammprodukt zum Detektieren einer spezifischen Merkmalsszene in einem Videobild nach Anspruch 11, wobei der Code, der im Videobild nach Merkmalsszenen sucht, ferner umfaßt:

Code, der ein Frame-Bild und einen entsprechenden Zeitcode erfaßt,
Code, der eine Merkmalsmenge für das Frame-Bild berechnet,
Code, der anhand der Merkmalsmenge bestimmt, ob das Frame-Bild eine Merkmalsszene ist, und wenn bestimmt wird, daß der Frame eine Merkmalsszene ist, Informationen über die Merkmalsszene in einer ersten Liste speichert, und
Code, der wiederholt die erfassenden, berechnenden und bestimmenden Codes für die nachfolgenden Frame-Bilder aufruft.

14. Computerprogrammprodukt zum Detektieren einer spezifischen Merkmalsszene in einem Videobild nach Anspruch 11, wobei der Code, der eine Detektionsfrequenz der Merkmalsszenen pro Zeiteinheit berechnet, ferner umfaßt:

Code, der eine Anzahl von detektierten Merkmalsszenen anhand der in der ersten Liste gespeicherten Information über die Merkmalsszene bestimmt,
Code, der eine Zeitdauer aus den detektierten Merkmalsszenen in den mehreren sequentiellen Strömen entsprechenden Zeitinformationen bestimmt, und
Code, der eine Detektionsfrequenz der Merkmalsszenen pro Zeiteinheit aus der Anzahl der detektierten Merkmalsszenen und der Zeitdauer berechnet.

15. Computerprogrammprodukt zum Detektieren einer spezifischen Merkmalsszene in einem Videobild nach Anspruch 11, wobei der klassifizierende Code ferner umfaßt:

Code, der Gruppen von Merkmalsszenen mit einer Anzahl von detektierten Merkmalsszenen pro Zeiteinheit, die größer oder gleich dem Schwellwert ist, aus den Merkmalsszenen auswählt, und
Code, der die Gruppen von Merkmalsszenen in einer zweiten Liste speichert.

16. Computerprogrammprodukt zum Detektieren einer spezifischen Merkmalsszene in einem Videobild nach Anspruch 11, ferner umfassend
Code, der eine spezifische Gruppe von Merkmalsszenen mit einer Detektionsfrequenz pro Zeiteinheit, die größer oder gleich einem Schwellwert ist, aus den in einem Videobild enthaltenen Merkmalsszenen erhält, und
Code, der die erhaltene spezifische Gruppe von Merkmalsszenen mittels einer Wiedergabetechnik zur Verringerung von Gesundheitsrisiken für Zuschauer wiedergibt.

17. Computerprogrammprodukt zum Detektieren einer spezifischen Merkmalsszene in einem Videobild nach Anspruch 16, wobei die Wiedergabetechnik zur Verringerung,von Gesundheitsrisiken für Zuschauer ferner je nach Auswahl eine Technik zur Wiedergabe der Merkmalsszenen mit einer langsameren Geschwindigkeit als der normalen oder eine Technik zur Wiedergabe der Merkmalsszenen mit einer Ersatzfarbe für eine in der Szene benutzte Farbe umfaßt.

18. Vorrichtung nach Anspruch 1, wobei die Vorrichtung enthält:

eine Einrichtung zum Suchen nach Merkmalsszenen in mindestens einem der mehreren das Videobild umfassenden Frames und Speichern von Informationen über die Merkmalsszene in einer ersten Liste, wenn eine Merkmalsszene aufgefunden ist.

19. Vorrichtung zum Detektieren einer spezifischen Merkmalsszene in einem Videobild nach Anspruch 18, ferner umfassend:

eine Einrichtung zum Erhalten einer spezifischen Gruppe von Merkmalsszenen mit einer Detektionsfrequenz pro Zeiteinheit, die größer oder gleich einem Schwellwert ist, aus in einem Videobild enthaltenen Merkmalsszenen, und

eine Einrichtung zur Wiedergabe der erhaltenen spezifischen Gruppe von Merkmalsszenen mittels einer Wiedergabetechnik zur Verringerung von Gesundheitsrisiken für Zuschauer.

**Revendications**

1. Dispositif de détection de scènes caractéristiques (100) pour détecter une scène caractéristique spécifique incluse dans une image vidéo, comportant :

un processeur de détection de scènes caractéristiques (110) qui détecte des scènes caractéristiques incluses dans une image vidéo, divisée et enregistrée en une pluralité de flux séquentiels de manière à diviser au moins une scène caractéristique entre deux flux quelconques parmi ladite pluralité de flux séquentiels, ayant des informations temporelles indicatives du temps de relecture des scènes caractéristiques, et

un processeur de classement de scènes caractéristiques (111) qui obtient une fréquence de détection des scènes caractéristiques par unité de temps, sur la base desdites informations temporelles des scènes caractéristiques détectées dans la pluralité de flux séquentiels, et classe et enregistre un groupe spécifique de scènes caractéristiques qui est une partie sélectionnée des scènes caractéristiques détectées ayant une fréquence de détection, c'est-à-dire le nombre des scènes caractéristiques détectées dans la partie par unité de temps, égale ou supérieure à une valeur de seuil.

2. Dispositif de détection de scènes caractéristiques pour détecter une scène caractéristique spécifique incluse dans une image vidéo selon la revendication 1, ledit dispositif comportant en outre :

un processeur d'acquisition vidéo (112) qui obtient un groupe spécifique de scènes caractéristiques ayant une fréquence de détection par unité de temps égale ou supérieure à une valeur de seuil, parmi des scènes caractéristiques incluses dans une image vidéo, à partir d'un flux séquentiel, et

un processeur de relecture de scènes caractéristiques (113) qui relit ledit groupe spécifique obtenu de scènes caractéristiques en utilisant une technique de relecture afin de réduire un risque pour la santé d'un téléspectateur.

3. Dispositif de détection de scènes caractéristiques (100) pour détecter une scène caractéristique spécifique incluse dans une image vidéo selon la revendication 2, dans lequel ladite technique de relecture pour réduire un risque pour la santé d'un téléspectateur comporte en outre une technique quelconque sélectionnée parmi une technique de relecture des scènes caractéristiques à une vitesse plus lente que la vitesse normale, une technique de relecture des scènes caractéristiques en utilisant une couleur remplaçant une couleur utilisée dans la scène.

4. Procédé pour détecter une scène caractéristique spécifique dans une image vidéo, ladite image vidéo étant divisée et enregistrée en une pluralité de flux séquentiels de manière à diviser au moins une scène caractéristique entre deux flux quelconques parmi ladite pluralité de flux séquentiels, ladite image vidéo ayant des informations temporelles indicatives du temps de relecture desdites scènes caractéristiques, ledit procédé comportant les étapes consistant à :

rechercher au moins une trame parmi une pluralité de trames constituant ladite image vidéo pour des scènes caractéristiques, et si une scène caractéristique est localisée, mémoriser des informations concernant ladite scène caractéristique dans une première liste,

calculer une fréquence de détection desdites scènes caractéristiques par unité de temps,

classer un groupe spécifique de scènes caractéristiques qui est une partie sélectionnée des scènes caractéristiques détectées ayant une fréquence de détection, c'est-à-dire le nombre des scènes caractéristiques détectées dans la partie par unité de temps, égale ou supérieure à une valeur de seuil.

5. Procédé pour détecter une scène caractéristique spécifique dans une image vidéo selon la revendication 4, dans lequel ladite pluralité de flux séquentiels incluent au moins un premier flux séquentiel et un second flux séquentiel, ladite image vidéo incluant au moins une scène caractéristique ayant une première partie enregistrée dans ledit premier flux séquentiel et une seconde partie enregistrée dans ledit second flux séquentiel, ladite recherche d'au moins une trame parmi une pluralité de trames comportant en outre l'étape consistant à déterminer sur la base desdites informations temporelles que ladite première partie et ladite seconde partie comportent ladite au moins une scène caractéristique.

**6.** Procédé pour détecter une scène caractéristique spécifique dans une image vidéo selon la revendication 4, dans lequel ladite recherche de scènes caractéristiques dans ladite image vidéo comporte en outre les étapes consistant à :

capturer une image de trame et un code temporel correspondant,
calculer une quantité caractéristique pour ladite image de trame,
déterminer sur la base de ladite quantité caractéristique si ladite image de trame est une scène caractéristique,
et si ladite trame est déterminée comme étant une scène caractéristique, mémoriser des informations concernant ladite scène caractéristique dans une première liste, et
répéter lesdites étapes de capture, calcul et détermination pour des images de trame suivantes.

**7.** Procédé pour détecter une scène caractéristique spécifique dans une image vidéo selon la revendication 4, dans lequel ledit calcul d'une fréquence de détection desdites scènes caractéristiques par unité de temps comporte en outre les étapes consistant à :

déterminer un nombre de scènes caractéristiques détectées, sur la base desdites informations concernant ladite scène caractéristique mémorisées dans ladite première liste,
déterminer une période de temps à partir desdites informations temporelles correspondant auxdites scènes caractéristiques détectées dans la pluralité de flux séquentiels, et
calculer ladite fréquence de détection des scènes caractéristiques par unité de temps à partir dudit nombre de scènes caractéristiques détectées et de ladite période de temps.

**8.** Procédé pour détecter une scène caractéristique spécifique dans une image vidéo selon la revendication 4, dans lequel ledit classement comporte en outre les étapes consistant à :

sélectionner parmi lesdits groupes de scènes caractéristiques des scènes caractéristiques ayant un nombre de scènes caractéristiques détectées par unité de temps égal ou supérieur à ladite valeur de seuil, et
mémoriser lesdits groupes de scènes caractéristiques dans une seconde liste.

**9.** Procédé pour détecter une scène caractéristique spécifique dans une image vidéo selon la revendication 4, ledit procédé comportant en outre les étapes consistant à :

obtenir un groupe spécifique de scènes caractéristiques ayant une fréquence de détection par unité de temps égale ou supérieure à une valeur de seuil, parmi des scènes caractéristiques incluses dans une image vidéo,
relire ledit groupe spécifique obtenu de scènes caractéristiques en utilisant une technique de relecture afin de réduire un risque pour la santé d'un téléspectateur.

**10.** Procédé pour détecter une scène caractéristique spécifique dans une image vidéo selon la revendication 9, dans lequel ladite technique de relecture destinée à réduire un risque pour la santé d'un téléspectateur comporte en outre une technique sélectionnée quelconque parmi une technique de relecture des scènes caractéristiques à une vitesse plus lente que la vitesse normale, une technique de relecture des scènes caractéristiques en utilisant une couleur remplaçant une couleur utilisée dans la scène.

**11.** Produit de programme informatique pour détecter une scène caractéristique spécifique dans une image vidéo, ladite image vidéo étant divisée et enregistrée en une pluralité de flux séquentiels de manière à diviser au moins une scène caractéristique entre deux flux quelconques parmi ladite pluralité de flux séquentiels, ladite image vidéo ayant des informations temporelles indicatives du temps de relecture desdites scènes caractéristiques, ledit produit de programme informatique comportant :

un code qui recherche au moins une trame parmi une pluralité de trames constituant ladite image vidéo pour des scènes caractéristiques et, si une scène caractéristique est localisée, mémorise des informations concernant ladite scène caractéristique dans une première liste,
un code qui calcule une fréquence de détection desdites scènes caractéristiques par unité de temps,
un code qui classe un groupe spécifique de scènes caractéristiques qui est une partie sélectionnée des scènes caractéristiques détectées ayant une fréquence de détection, c'est-à-dire le nombre des scènes caractéristiques détectées dans la partie par unité de temps, égale ou supérieure à une valeur de seuil, et

un support de mémorisation lisible par ordinateur pour conserver le code.

12. Produit de programme informatique pour détecter une scène caractéristique spécifique dans une image vidéo selon la revendication 11, dans lequel ladite pluralité de flux séquentiels inclut au moins un premier flux séquentiel et un second flux séquentiel, ladite image vidéo incluant au moins une scène caractéristique ayant une première partie enregistrée dans ledit premier flux séquentiel et une seconde partie enregistrée dans ledit second flux séquentiel, dans lequel ledit code qui recherche au moins une trame parmi la pluralité de trames détermine sur la base desdites informations temporelles que ladite première partie et ladite seconde partie comportent ladite au moins une scène caractéristique.

13. Produit de programme informatique pour détecter une scène caractéristique spécifique dans une image vidéo selon la revendication 11, dans lequel ledit code qui recherche des scènes caractéristiques dans ladite image vidéo comporte en outre :

un code qui capture une image de trame et un code temporel correspondant,
un code qui calcule une quantité caractéristique pour ladite image de trame,
un code qui détermine sur la base de ladite quantité caractéristique si ladite image de trame est une scène caractéristique, et si ladite trame est déterminée comme étant une scène caractéristique, mémorise des informations concernant ladite scène caractéristique dans une première liste, et
un code qui appelle de manière répétée ledit code qui capture, ledit code qui calcule et ledit code qui détermine pour des images de trame suivantes.

14. Produit de programme informatique pour détecter une scène caractéristique spécifique dans une image vidéo selon la revendication 11, dans lequel ledit code qui calcule une fréquence de détection desdites scènes caractéristiques par unité de temps comporte en outre :

un code qui détermine un nombre de scènes caractéristiques détectées, sur la base desdites informations concernant ladite scène caractéristique mémorisée dans ladite première liste,
un code qui détermine une période temporelle à partir desdites informations temporelles correspondant auxdites scènes caractéristiques détectées dans la pluralité de flux séquentiels, et
un code qui calcule ladite fréquence de détection des scènes caractéristiques par unité de temps à partir dudit nombre de scènes caractéristiques détectées et de ladite période temporelle.

15. Produit de programme informatique pour détecter une scène caractéristique spécifique dans une image vidéo selon la revendication 11, dans lequel ledit code qui effectue un classement comporte en outre :

un code qui sélectionne à partir desdits groupes de scènes caractéristiques des scènes caractéristiques ayant un nombre de scènes caractéristiques détectées par unité de temps égale ou supérieure à ladite valeur de seuil, et
un code qui mémorise lesdits groupes de scènes caractéristiques dans une seconde liste.

16. Produit de programme informatique pour détecter une scène caractéristique spécifique dans une image vidéo selon la revendication 11, ledit produit de programme informatique comportant en outre :

un code qui obtient un groupe spécifique de scènes caractéristiques ayant une fréquence de détection par unité de temps égale ou supérieure à une valeur de seuil, parmi des scènes caractéristiques incluses dans une image vidéo,
un code qui relit ledit groupe spécifique obtenu de scènes caractéristiques en utilisant une technique de relecture afin de réduire un risque pour la santé d'un téléspectateur.

17. Produit de programme informatique pour détecter une scène caractéristique spécifique dans une image vidéo selon la revendication 16, dans lequel ladite technique de relecture afin de réduire un risque pour la santé d'un téléspectateur comporte en outre une technique sélectionnée quelconque parmi une technique de relecture des scènes caractéristiques à une vitesse plus lente que la vitesse normale, une technique de relecture des scènes caractéristiques en utilisant une couleur remplaçant une couleur utilisée dans la scène.

18. Dispositif selon la revendication 1 dans lequel le dispositif inclut des moyens pour rechercher au moins une trame parmi la pluralité de trames constituant ladite image vidéo pour des scènes caractéristiques, et si une scène caractéristique est localisée, pour mémoriser des informations concernant ladite scène caractéristique dans une première liste.

**19.** Dispositif pour détecter une scène caractéristique spécifique dans une image vidéo selon la revendication 18, ledit dispositif comportant en outre :

des moyens pour obtenir un groupe spécifique de scènes caractéristiques ayant une fréquence de détection par unité de temps égale ou supérieure à une valeur de seuil, parmi des scènes caractéristiques incluses dans une image vidéo,

des moyens pour relire ledit groupe spécifique obtenu de scènes caractéristiques en utilisant une technique de relecture afin de réduire un risque pour la santé d'un téléspectateur.

100

Feature scene detecting apparatus

101

CPU

102

Memory

110

Feature scene detection processor

112

Video acquisition processor

Feature scene classification processor

Feature scene replay processor

111

113

108

I/F

I/F

I/F

I/F

I/F

107

Video input device

Input device

106

104

Auxiliary memory device

105

Display

103

109

Video replay device

FIG. 1

FIG. 2

FIG. 3

FIG. 4

EP 1 069 765 B1

FIG. 5

FIG. 6

0 1 : 0 0 : 0 5 : 0 2

FIG. 7

[ROLL 2]

0 0 : 0 0 : 0 5 : 0 2

FIG. 8

START

Obtain group head video image number and its time code
(RollCnts and TCs) — 901

Obtain group end video image number and its time code
(RollCnte and TCe) — 902

$RollCnt_i = RollCnt_s$ — 903

Wait until RollCnts-th video image is set — 904

Designate TCs and set replay start position in video reproduction device — 905

Obtain still image fi as 1 video frame and time code TCi
from video reproduction device — 906

907 — Red coloration to be changed? — NO

YES — 908

Change red coloration to that of threshold value

909 — Slow replay to be performed? — NO

YES — 910

Stop replay processing for n seconds

Display still image fi — 911

913 — YES — $RollCnt_i < RollCnt_s$ — 912

NO — Regarding RollCnti, TCre=TCi, or video replay device stops

NO — 917

·914 — YES — $TC_i <= TC_r$ — YES

915 — $RollCnt_i = RollCnt_i + 1$

NO

916 — Set RollCnti-th video image

END

Set TCrs of RollCnti-th video image in video reproduction device

FIG. 9

FIG. 10

FIG. 11

502

Video display

(X):(X).05:(0]

1102

1101

00 00 C0 00 ...... 00 00 05 01 → 00 00 05 02 → 00 00 05 03 ...... 00 00 06 0/ (X) C0 05 C8 ......

Stop replay for
n seconds

Stop replay for
n seconds

Video images of parts in group

Time

26

EP 1 069 765 B1